# EUROPEAN PATENT SPECIFICATION

(11) **EP 3 977 544 B1**
(45) Date of publication and mention of the grant of the patent: **25.11.2026**
(21) Application number: 20818160.2
(22) Date of filing: 03.06.2020
(51) Int. Cl.: H01M 4/36, H01M 4/62, H01M 4/134, H01M 4/38, H01M 10/0525, H01M 4/02, H01M 4/04, H01M 4/1395

(54) **METHODS OF FORMING CARBON-SILICON COMPOSITE MATERIAL ON A CURRENT COLLECTOR**
VERFAHREN ZUR HERSTELLUNG VON KOHLENSTOFF-SILICIUM-VERBUNDMATERIAL AUF EINEM STROMKOLLEKTOR
PROCÉDÉS DE FORMATION D'UN MATÉRIAU COMPOSITE DE CARBONE-SILICIUM SUR UN COLLECTEUR DE COURANT

(30) Priority: 03.06.2019 US 201916430306
(43) Date of publication of application: 06.04.2022
(73) Proprietor: Enevate Corporation, Irvine, CA 92617 (US)
(72) Inventor: PARK, Benjamin Yong, Irvine, California 92617 (US); KAMATH, Rahul R., Irvine, California 92617 (US); BONHOMME, Fred, Irvine, California 92617 (US)
(74) Representative: Bosch Jehle Patentanwaltsgesellschaft mbH
(86) International application number: PCT/US2020/035962
(87) International publication number: WO 2020/247526

(56) References cited:
- US-A1- 2016 268 646
- US-A1- 2016 268 646
- US-A1- 2018 166 684
- US-A1- 2018 166 684
- US-A1- 2018 287 129
- US-A1- 2018 287 129
- US-A1- 2019 355 966
- US-A1- 2019 355 966

## Description

### CROSS-REFERENCE TO RELATED APPLICATIONS

This application claims priority to U.S. Application No. 15/471,860, filed March 28, 2017, and U.S. Patent Application No. 16/430,306, filed on June 3, 2019.

### BACKGROUND

### Field of the Invention

The present disclosure relates to electrodes, electrochemical cells, and methods of forming electrodes and electrochemical cells. The present disclosure relates to methods of forming carbon-silicon composite material on a current collector.

### Description of the Related Art

A lithium ion battery typically includes a separator and/or electrolyte between an anode and a cathode. In one class of batteries, the separator, cathode and anode materials are individually formed into sheets or films. Sheets of the cathode, separator and anode are subsequently stacked or rolled with the separator separating the cathode and anode (e.g., electrodes) to form the battery. For the cathode, separator and anode to be rolled, each sheet must be sufficiently deformable or flexible to be rolled without failures, such as cracks, brakes, mechanical failures, etc. Typical electrodes include electro-chemically active material layers on electrically conductive metals (e.g., aluminum and copper). For example, carbon can be deposited onto a current collector along with an inactive binder material. Carbon is often used because it has excellent electrochemical properties and is also electrically conductive. Electrodes can be rolled or cut into pieces which are then layered into stacks. The stacks are of alternating electro-chemically active materials with the separator between them. The patent application US2018/287129 A1, describes a method of forming an electrode.

### SUMMARY

A method of forming an electrode according to claim, 1 is provided.

In various embodiments, providing the current collector can comprise providing a current collector comprising stainless steel. For example, providing the current collector can comprise providing a stainless steel foil. As another example, providing the current collector can comprise providing a clad foil comprising stainless steel on at least one side of the clad foil. Providing the mixture on the current collector can comprise providing the mixture on the at least one side of the clad foil comprising the stainless steel.

In various embodiments, providing the current collector can comprise providing a current collector comprising tungsten. For example, providing the current collector can comprise providing a tungsten foil. As another example, providing the current collector can comprise providing a clad foil comprising tungsten on at least one side of the clad foil. Providing the mixture on the current collector can comprise providing the mixture on the at least one side of the clad foil comprising the tungsten.

In various embodiments, providing the current collector can comprise providing the current collector coated with a polymer on at least one side of the current collector. In some such embodiments, providing the mixture can comprise providing the mixture on the at least one side of the current collector comprising the polymer. In some embodiments, the polymer and the precursor can be the same material. The precursor can comprise polyamideimide, polyamic acid, polyimide, phenolic resin, or epoxy resin.

In some embodiments, providing the current collector can comprise providing the current collector coated with a carbon film on at least one side of the current collector. In some such embodiments, providing the current collector coated with the carbon film can comprise providing a carbon precursor on at least one side of the current collector, and pyrolysing the carbon precursor to form the carbon film. The carbon precursor can comprise polyamideimide, polyamic acid, polyimide, phenolic resin, or epoxy resin. In some instances, providing the mixture can comprise providing the mixture on at least one side of the current collector comprising the carbon film.

In some embodiments, providing the mixture can comprise providing a slurry comprising the precursor and silicon particles. Providing the mixture can comprise slot die coating the mixture on the current collector. The method, in some embodiment, can further comprise drying the mixture prior to pyrolysing the mixture.

Providing the mixture can comprise providing the silicon particles such that the composite material comprises the silicon particles at about 70% to about 90% by weight. In some instances, providing the mixture can further comprise providing conductive particles in the mixture. In some instances, providing the mixture can comprise providing graphite in the mixture.

In various embodiments, the electrode can be an anode. In some embodiments, a battery electrode can be formed by the method.

Pyrolysing the first carbon precursor causes the pyrolyzed carbon to diffuse into the current collector. In some implementations, pyrolysing the first and second carbon precursors can occur during the same heat treatment. In some instances, pyrolysing the first and second carbon precursors can occur at a temperature in a range of about 350 °C to about 1350 °C. For example, pyrolysing the first and second carbon precursors can occur at a temperature in a range of about 350 °C to about 1275 °C. As another example, pyrolysing the first and second carbon precursors can occur at a temperature in a range of about 700 °C to about 1350 °C. As another example, pyrolysing the first and second carbon precursors can occur at a temperature in a range of about 700 °C to about 1275 °C. As another example, pyrolysing the first and second carbon precursors can occur at a temperature in a range of about 900 °C to about 1350 °C. As another example, pyolysing the first and second carbon precursors can occur at a temperature in a range of about 900 °C to about 1275 °C. In some implementations, the first carbon precursor can have a 10% to 70% char yield.

In various implementations, the first carbon precursor can comprise polyamic acid, phenol formaldehyde resin, polypyrrole, polyacrylonitrile, polyamideimide, polyimide, a polyimide precursor, or a combination thereof. For example, the polyimide precursor can comprise pyromellitic dianhydride oxidianiline (PMDA-ODA), biphenyl tetracarboxylic acid dianhydride oxidianiline (BPDA-ODA), biphenyl tetracarboxylic acid dianhydride- p-phenylene diamine (BPDA-PDA), pyromellitic dianhydride - p-phenylene diamine (PMDA-PDA), or a combination thereof.

In some implementations, providing the first carbon precursor can comprise coating the first carbon precursor on the current collector. In some instances, the method can further comprise drying the first carbon precursor prior to providing the mixture on the first carbon precursor. In some instances, the first carbon precursor on the current collector can have a thickness in the range of about 1µm to about 1mm. The first carbon precursor and the second carbon precursor can be chemically the same. Alternatively, the first carbon precursor can be chemically different than the second carbon precursor.

In some instances, providing the mixture can comprise providing a slurry comprising the second carbon precursor and silicon particles. In some instances, the method can further comprise drying the mixture prior to pyrolysing the second carbon precursor.

The current collector comprises a transition element and/or an alloy comprising a transition element. For example, the transition element or the alloy can comprise chromium, molybdenum, iron, vanadium, tungsten, tantalum, niobium, or a combination thereof. In some instances, the alloy can comprise nickel and chromium. As an example, the alloy can comprise nichrome. In some instances, the alloy can comprise stainless steel. The current collector comprises a layer comprising the transition element and/or the alloy comprising the transition element on at least one side of the current collector, and the first carbon precursor is provided on the at least one side of the current collector. In some instances, the current collector can comprise nickel and/or copper.

In some implementations, providing the mixture can comprise providing the silicon particles such that the composite material comprises the silicon particles at about 60% to about 99% by weight. In some instances, the electrode can be an anode.

In certain implementations, a method of forming an electrochemical device is provided. The method can include providing a first electrode. Providing the first electrode can comprise providing the electrode formed by a method as described herein. The method can also include providing a second electrode and providing electrolyte. In some instances, the first electrode can be an anode and the second electrode can be a cathode. The electrochemical device can be a battery.

### BRIEF DESCRIPTION OF THE DRAWINGS

Figures 1A and 1B show the before and after photograph images of pyrolysing on a copper foil.
Figures 2A and 2B show photograph images of pyrolysing on a nickel foil at 650°C and 750°C respectively.
Figure 3A shows a photograph image of a silicon-carbon composite material that was pyrolysed at 700°C on copper foil.
Figure 3B shows a scanning electron microscope (SEM) image of the cross section of a silicon-carbon composite material that was pyrolysed on a copper foil.
Figure 4 illustrates an example method of forming an electrode in accordance with certain embodiments described herein.
Figure 5 shows examples of a slurry of carbon precursor and silicon particles coated and dried on stainless steel foils.
Figure 6 shows examples of pyrolysed composite material on stainless steel.
Figure 7 illustrates an example method of forming an electrode in accordance with certain implementations described herein.
Figure 8 shows a photograph image of a silicon-carbon composite material that was pyrolysed on a nichrome foil at 700°C.
Figure 9 is a plot of discharge capacity as a function of the number of cycles for different samples.
Figure 10 is a plot of the IEC (International Electrotechnical Commission) capacity as a function of the cycle number for different samples.
Figure 11 shows SEM images of silicon-carbon composite material that was pyrolysed on a nichrome foil under different magnifications.
Figure 12 shows SEM images of silicon-carbon composite material that was pyrolysed on a stainless steel foil under different magnifications
Figure 13 shows a graph of coin cell capacity (mAh) versus cycle number for different samples.
Figure 14 shows a graph of coin cell discharge capacity (mAh) versus cycle number for different samples.

### DETAILED DESCRIPTION

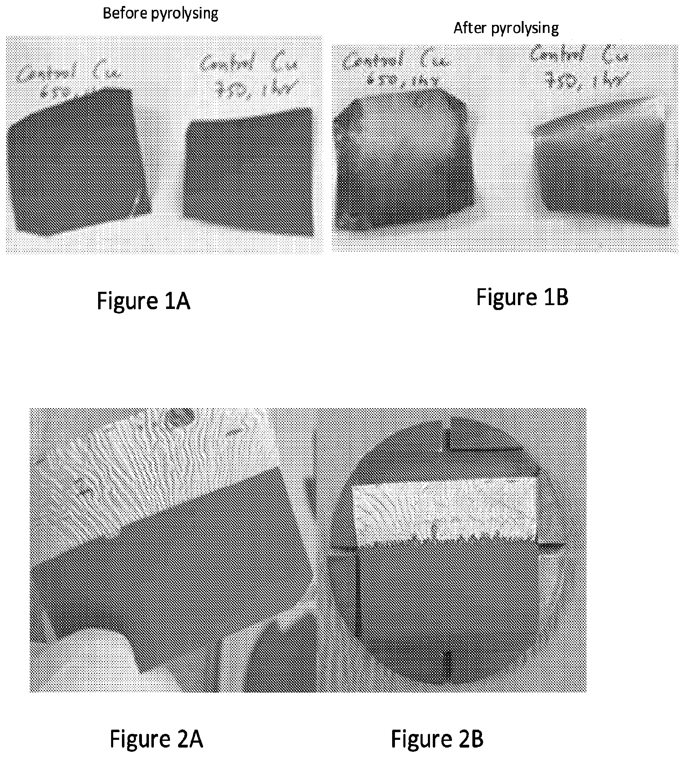

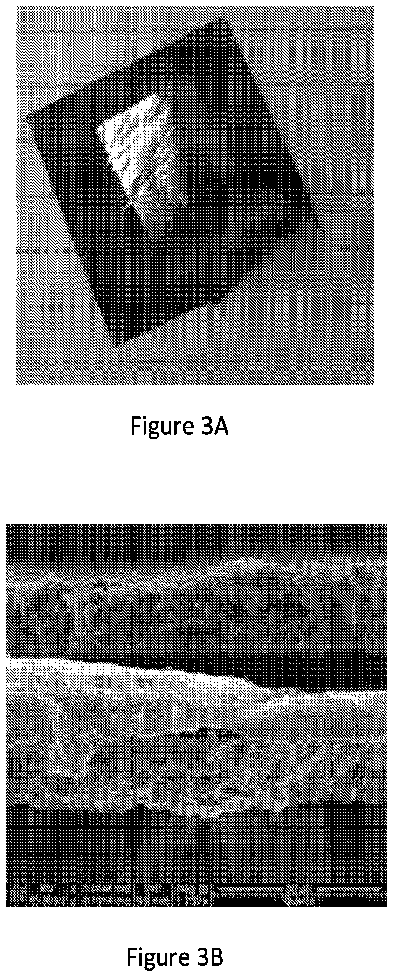

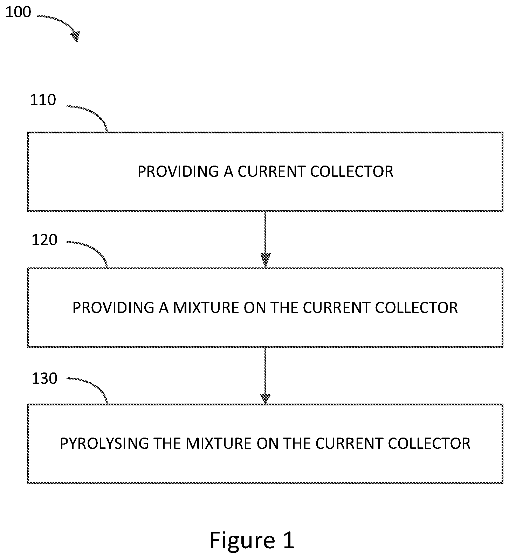

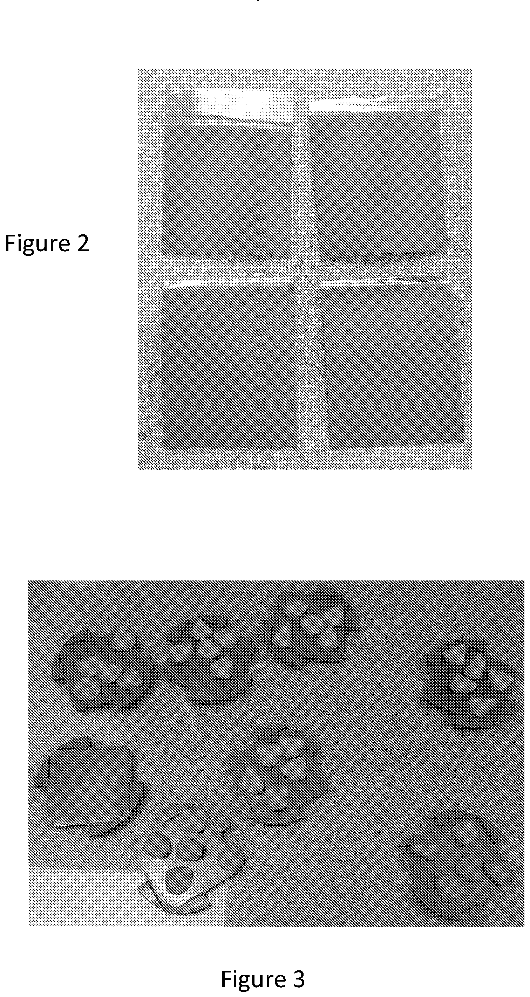

This application describes certain embodiments of electrodes (e.g., anodes and cathodes) and electrochemical cells that may include carbonized polymer and silicon material. For example, a mixture that includes a carbon precursor including silicon material can be formed into a composite material. This mixture can include both carbon and silicon and thus can be referred to as a carbon-silicon composite material, a silicon-carbon composite material, a carbon composite material, or a silicon composite material. This application also describes certain methods of forming such composite material on a current collector. A mixture comprising a carbon precursor and silicon material is currently not pyrolysed directly on a current collector (e.g., a copper or nickel current collector). During the carbonization process (e.g., under heat), the silicon and/or carbon may react directly with the metal current collector (e.g., creating a copper or nickel silicide or carbide). The metal silicide or carbide may prevent the composite material from adhering to the current collector and/or destroy the current collector by converting it into a different material. For example, Figures 1A and 1B show photograph images of silicon carbon precursor slurry coated on 15 µm copper foil, dried, and then pyrolysed to 650°C and 750°C under an argon atmosphere. Figure 1A shows the current collector before pyrolysing, and Figure 1B shows the current collector after pyrolysing. At 750°C, the copper foil degraded. Without being bound by theory, the reaction of the foil with silicon formed copper silicide resulting in holes in the foil. Similarly, Figures 2A and 2B show photograph images of the slurry coated, dried, and pyrolysed on nickel foil at 650°C and 750°C respectively. The nickel foil degraded due to the reaction with silicon at the composite material/foil interface. Figure 3A shows a silicon-carbon composite material that was pyrolysed at 700°C on copper foil. A tape test showed poor adhesion between the composite material/foil interface. In addition, a bend test resulted in the foil being totally exposed with no coverage. Figure 3B is a scanning electron microscope (SEM) image of the cross section of a silicon-carbon composite material that was pyrolysed on a copper foil. The SEM image shows poor adhesion at the composite material/foil interface. Various embodiments described herein can advantageously pyrolyse carbon precursor including silicon material on a current collector with sufficient attachment to the current collector and/or with relatively little or no adverse conversion of the current collector.

Typical carbon anode electrodes include a current collector such as a copper sheet. Carbon is deposited onto the collector along with an inactive binder material. Carbon is often used because it has excellent electrochemical properties and is also electrically conductive. Anode electrodes used in the rechargeable lithium-ion cells typically have a specific capacity of approximately 200 milliamp hours per gram (including the metal foil current collector, conductive additives, and binder material). Graphite, the active material used in most lithium ion battery anodes, has a theoretical energy density of 372 milliamp hours per gram (mAh/g). In comparison, silicon has a high theoretical capacity of 4200 mAh/g. Silicon, however, swells in excess of 300% upon lithiation. Because of this expansion, anodes including silicon may expand/contract and lose electrical contact to the rest of the anode. Therefore, a silicon anode should be designed to be able to expand while maintaining good electrical contact with the rest of the electrode.

U.S. Patent No. 9,178,208, U.S. Patent Application Publication No. 2014/0170498, and U.S. Patent No. 9,553,303, describe certain embodiments of carbon-silicon composite materials using carbonized polymer and silicon material. The carbonized polymer can act as an expansion buffer for silicon particles during cycling so that a high cycle life can be achieved. In certain embodiments, the resulting electrode can be an electrode that is comprised substantially of active material. For example, the carbonized polymer can form a substantially continuous conductive carbon phase(s) in the entire electrode as opposed to particulate carbon suspended in a non-conductive binder in one class of conventional lithium-ion battery electrodes. Because the polymer can be converted into an electrically conductive and electrochemically active matrix, the resulting electrode can be conductive enough that a metal foil or mesh current collector may be omitted, minimized, or reduced in some embodiments. Accordingly, in U.S. Patent No. 9,178,208, U.S. Patent Application Publication No. 2014/0170498, and U.S. Patent No. 9,553,303, certain embodiments of monolithic, self-supported electrodes are disclosed. The electrodes can have a high energy density of between about 500 mAh/g to about 3500 mAh/g that can be due to, for example, 1) the use of silicon, 2) elimination or substantial reduction of metal current collectors, and 3) being comprised entirely or substantially entirely of active material.

A current collector may be preferred in some applications, for example, where current above a certain threshold or additional mechanical support may be desired. As described above, a mixture comprising a carbon precursor and silicon material is currently not pyrolysed directly on a current collector because it is thought that during the pyrolysing process, the carbon and/or silicon may react with the metal current collector. To overcome such challenges, the mixture can be provided and pyrolysed first on a substrate, removed from the substrate, and then attached to the current collector. U.S. Patent No. 9,397,338 and U.S. Patent No. 9,583,757, describe certain embodiments of a composite material attached to a current collector using an electrode attachment substance.

The present application also describes certain embodiments of electrodes including a current collector, electrochemical cells comprising such electrodes, and methods of forming such electrodes and electrochemical cells. For example, in various embodiments, the electrodes include composite material attached to a current collector. The electrodes described herein can be used as an anode in lithium ion batteries; they may also be used as the cathode in some electrochemical couples with additional additives. The electrodes can also be used in either secondary batteries (e.g., rechargeable) or primary batteries (e.g., non-rechargeable). Furthermore, various embodiments include material pyrolysed on a current collector that can sufficiently adhere to the current collector and with relatively little or no adverse reaction with the metal current collector.

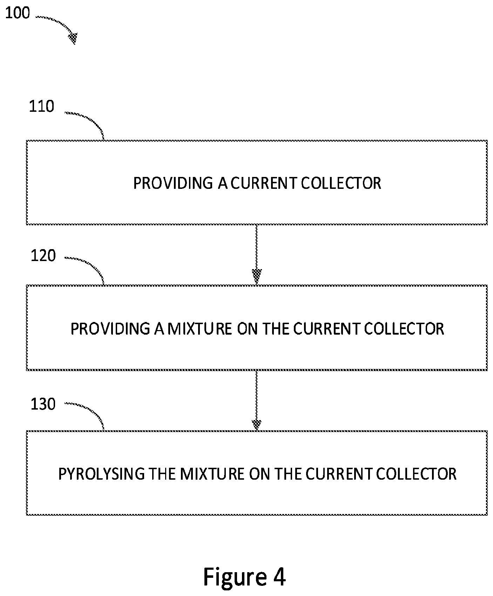

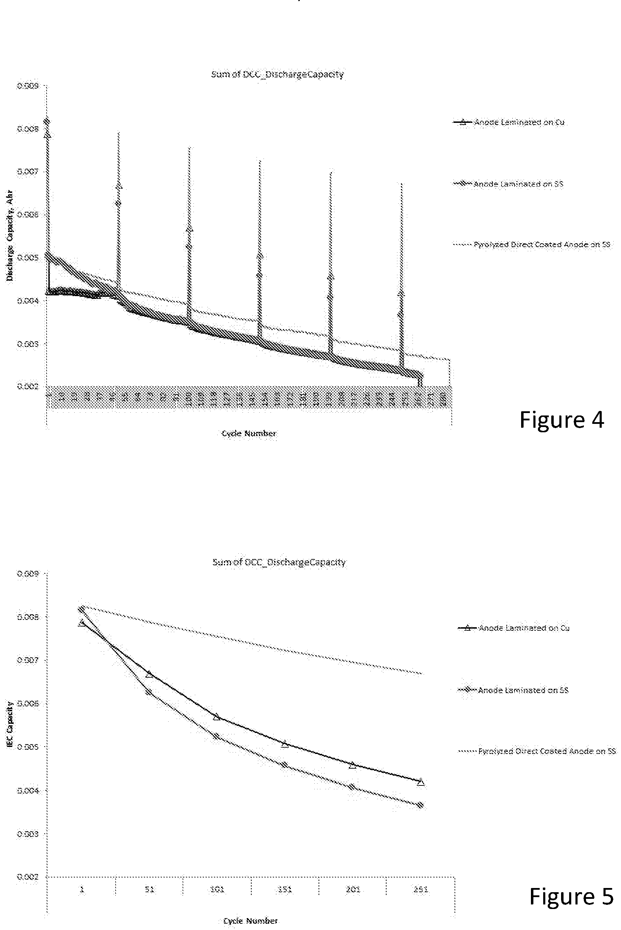

Figure 4 illustrates an example method of forming an electrode in accordance with certain embodiments described herein. The method 100 of forming an electrode can include providing a current collector as shown in block 110. The method 100 can also include providing a mixture on the current collector as shown in block 120. The mixture can include a precursor (e.g., a carbon precursor) and silicon particles. As shown in block 130, the method 100 can further include pyrolysing the mixture on the current collector. Pyrolysing the mixture can convert the precursor into one or more types of carbon phases as a substantially continuous phase with the silicon particles distributed throughout the composite material, and can adhere the composite material to the current collector. Accordingly, various embodiments described herein can pyrolyse a mixture of carbon precursor and silicon particles on a current collector to form a carbon-silicon composite material that adheres to the current collector. Such embodiments can advantageously result in higher yields due to less handling of fragile electrodes. Such embodiments can also advantageously result in faster processing and lower cost.

Without being bound to any particular theory, the silicon and/or carbon in the mixture may react with the metal, such as copper or nickel, in a current collector, likely creating a metal silicide or carbide that prevents adherence to the current collector and/or destroys the current collector by converting it into a different material. In various embodiments described herein, by using a current collector that reduces the likelihood of reactions with silicon and/or carbon, the formation of a metal silicide and/or carbide can be reduced (and/or avoided in some instances), allowing the adherence of the composite material to the current collector while preserving the conductive metal nature of the current collector. Some embodiments can include providing and pyrolysing a mixture of carbon precursor and silicon material on a current collector comprising a material that does not react with silicon and/or carbon. For example, instead of using a copper or nickel current collector, some embodiments can include providing and pyrolysing a mixture of carbon precursor and silicon material on a current collector comprising stainless steel, tungsten, or a combination thereof. Stainless steel and tungsten do not appear to react with silicon and carbon in the same manner as copper or nickel. As another example, some embodiments can include providing and pyrolysing a mixture of carbon precursor and silicon material on a current collector that is coated with a layer of polymer or carbon. Without being bound to any particular theory, the presence of a layer of coating on the current collector may isolate the current collector from the silicon and/or carbon in the mixture, reducing and/or avoiding in some instances, the formation of metal silicide and/or carbide. The steps in Figure 1 will now be described.

With reference to block 110, a current collector is provided. The current collector that is provided can include a current collector comprising stainless steel. In some embodiments, the current collector can comprise mainly stainless steel. For example, the current collector can include a stainless steel metal, e.g., a stainless steel foil. In some other embodiments, the current collector can include stainless steel as one of multiple materials. For example, the current collector can include a clad material comprising stainless steel, e.g., a clad foil comprising stainless steel on at least one side (e.g., on one side or on both sides) of the clad foil. In some embodiments, the current collector can comprise mainly tungsten. For example, the current collector can include a tungsten metal, e.g., a tungsten foil. In some other embodiments, the current collector can include tungsten as one of multiple materials. For example, the current collector can include a clad material comprising tungsten, e.g., a clad foil comprising tungsten on at least one side (e.g., on one side or on both sides) of the clad foil. As another example, the current collector can include a clad material comprising tungsten on one side and stainless steel on the other side.

In some embodiments, the current collector may include a polymer coating. For example, the current collector may include a polymer coating on a copper or nickel current collector. As another example, the current collector may include a polymer coating on a stainless steel and/or tungsten current collector. The current collector can be coated with a polymer on at least one side of the current collector. The polymer coating may include a carbon precursor, such as any of the precursors described herein such as polyamideimide. In some embodiments, the polymer coating may be the same material as the precursor in the mixture. In some other embodiments, the polymer coating might not be the same material as the precursor in the mixture. In various embodiments, the polymer coating can include any one or more of the polymers disclosed herein including polyamideimide, polyamic acid, polyimide, a polyimide precursor, phenolic resins (e.g., phenol formaldehyde resin), polypyrrole, polyacrylonitrile, epoxy resins, etc. The polyimide precursor can comprise pyromellitic dianhydride oxidianiline (PMDA-ODA), biphenyl tetracarboxylic acid dianhydride oxidianiline (BPDA-ODA), biphenyl tetracarboxylic acid dianhydride- p-phenylene diamine (BPDA-PDA), pyromellitic dianhydride - p-phenylene diamine (PMDA-PDA), or a combination thereof. The thickness of the polymer coating in various embodiments can be in the range of about 200 nanometers to about 5 microns (for example, about 200 nm, about 250 nm, about 300 nm, about 400 nm, about 500 nm, about 600 nm, about 700 nm, about 750 nm, about 800 nm, about 900 nm, about 1 micron, about 2 microns, about 3 microns, about 4 microns, about 5 microns, about 10 microns, about 50 microns, about 100 microns, about 250 microns, about 500 microns, about 750 microns, about 1 mm, or any value within this range, etc.) or any range formed by any of the values within this range. In some instances, a thickness in the range of about 1 µm to about 1 mm can reduce (and/or prevent) silicon interaction with the current collector during coating and pyrolysis.

In some embodiments, the current collector with a polymer coating may be heat treated before further treatment (e.g., before a mixture is provided on the current collector). The heat treatment can create a carbon-coated current collector through a pyrolysis process. The pyrolysis process can be similar to the process to pyrolyse the mixture as described herein. Accordingly, in some embodiments, the provided current collector can include a current collector coated with a carbon material (e.g., a carbon film).

With reference to block 120, the mixture is provided on the current collector. In some embodiments, the mixture can be provided on the current collector, e.g., on a current collector comprising stainless steel, tungsten, or a combination thereof. For example, the mixture can be coated on a stainless steel or tungsten foil (e.g., directly coated in various embodiments). As another example, the mixture can be coated (e.g., directly coated in various embodiments) on at least one side of a clad foil comprising stainless steel, tungsten, or a combination thereof. The other side of the clad foil can include a different material, e.g., including copper or nickel. In some embodiments, the clad foil may comprise stainless steel on both sides of the clad foil, tungsten on both sides of the clad foil, or stainless steel on one side of the clad foil and tungsten on the other side of the clad foil. In some such instances, the mixture can also be coated on both sides of the clad foil.

As other examples, the mixture can be provided on a current collector coated with a polymer, carbon, or combination thereof on at least on side of the current collector. The mixture can be provided on the side of the current collector coated with the polymer, carbon, or combination thereof. The current collector may also be coated with polymer, carbon, or combination thereof on both sides (e.g., polymer coating on both sides of the current collector, carbon coating on both sides of the current collector, or carbon coating on one side and polymer coating on the other side, etc.), and the mixture can be provided on both sides of the current collector. In some instances, the current collector with the polymer coating, carbon coating, or combination thereof may include a current collector comprising stainless steel, tungsten, or a combination thereof. However, in some instances, the current collector with the polymer coating, carbon coating, or combination thereof does not necessarily include stainless steel, tungsten, or a combination thereof. For example, the current collector with the polymer or carbon coating may include copper or nickel in some embodiments.

The mixture that is provided on the current collector can include any of the mixtures described in U.S. Patent No. 9,178,208, U.S. Patent Application Publication No. 2014/0170498, and/or U.S. Patent No. 9,553,303. The mixture can include a variety of different components. The mixture can include one or more precursors. In certain embodiments, the precursor is a hydrocarbon compound. For example, the precursor can include polyamideimide, polyamic acid, polyimide, polyimide precursor, etc. Other precursors include phenolic resins (phenol formaldehyde resin), polypyrrole, polyacrylonitrile, epoxy resins, and other polymers. The polyimide precursor can comprise pyromellitic dianhydride oxidianiline (PMDA-ODA), biphenyl tetracarboxylic acid dianhydride oxidianiline (BPDA-ODA), biphenyl tetracarboxylic acid dianhydride- p-phenylene diamine (BPDA-PDA), pyromellitic dianhydride - p-phenylene diamine (PMDA-PDA), or a combination thereof. The mixture can further include a solvent. For example, the solvent can be N-methyl-pyrollidone (NMP). Other possible solvents include acetone, diethyl ether, gamma butyrolactone, isopropanol, dimethyl carbonate, ethyl carbonate, dimethoxyethane, dimethylformamide (DMF), dimethyl sulfoxide (DMSO), dimethylacetamide (DMAc), etc. As an example, a high molecular weight (e.g., greater than 200,000 g/mol) polyamideimide powder can be dispersed in a dipolar aprotic solvent such as N-Methyl-2-pyrrolidone (NMP) overnight at 75°C. Higher temperatures that are under the gelation temperature and/or under the flash point of the solvent can also be used. Examples of precursor and solvent solutions include PI-2611 (HD Microsystems), PI-5878G (HD Microsystems) and VTEC PI-1388 (RBI, Inc.). PI-2611 is comprised of >60% n-methyl-2-pyrollidone and 10-30% s-biphenyldianhydride/p-phenylenediamine. PI-5878G is comprised of >60% n-methylpyrrolidone, 10-30% polyamic acid of pyromellitic dianhydride/oxydianiline, 10-30% aromatic hydrocarbon (petroleum distillate) including 5-10% 1,2,4-trimethylbenzene. In certain embodiments, the amount of precursor (e.g., solid polymer) in the solvent is about 10 wt. % to about 30 wt. %.

The mixture can include silicon particles as described herein. The mixture may comprise about 5 % to about 80 % by weight of the precursor, and greater than 0 % to about 99 % by weight of the silicon particles. Additional materials can also be included in the mixture. As an example, carbon particles including graphite active material, chopped or milled carbon fiber, carbon nanofibers, carbon nanotubes, and other conductive carbons can be added to the mixture. Conductive particles can also be added to the mixture. In addition, the mixture can be mixed to homogenize the mixture. In some instances, the silicon particles can be dispersed in the precursor under high shear conditions. For example, a centrifugal planetary mixer can be used. As another example, a ball mill can be used to achieve deagglomeration of silicon particles in a solvent, which can then be dispersed in the resin to produce the slurry mixture.

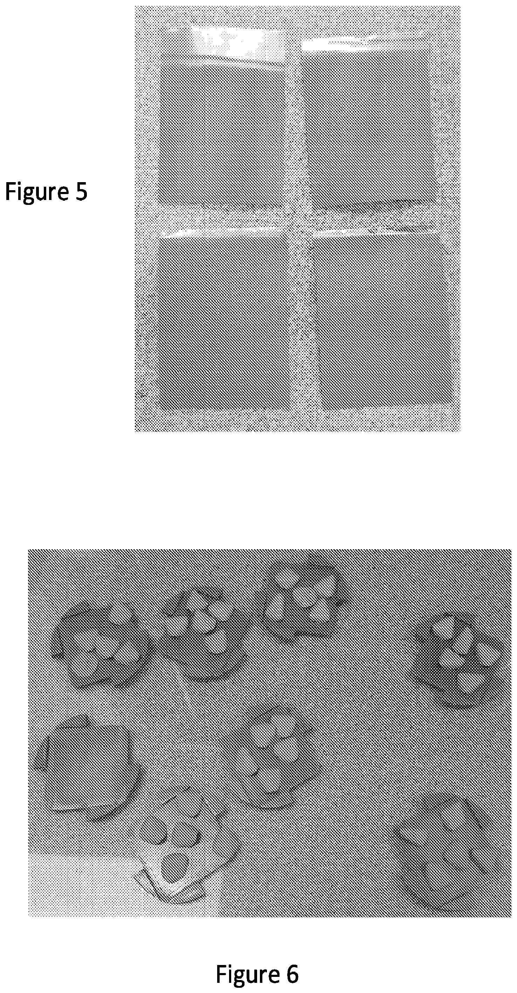

In certain embodiments, the mixture can be cast on the current collector. In some embodiments, casting includes using a gap extrusion, tape casting, or a blade casting technique. The blade casting technique can include applying a coating to the current collector by using a flat surface (e.g., blade) which is controlled to be a certain distance above the current collector. A slurry (or liquid) can be applied to the current collector, and the blade can be passed over the slurry to spread the slurry over the current collector. The thickness of the coating can be controlled by the gap between the blade and the current collector since the slurry passes through the gap. As the slurry passes through the gap, excess slurry can also be scraped off. For example, the mixture can be cast on the current collector. In some embodiments, the mixture can then be dried to remove the solvent. In some instances, the mixture can be dried in a convention oven. For example, a polyamic acid and NMP solution can be dried at about 110 °C for about 2 hours to remove the NMP solution. In some embodiments, the dried mixture can be further dried or cured. In some embodiments, mixture can be hot pressed (e.g., between graphite plates in an oven). A hot press can be used to dry and to keep the dried mixture flat. For example, the dried mixture from a polyamic acid and NMP solution can be hot pressed at about 200 °C for about 8 to 16 hours. Alternatively, the entire process including casting and drying can be done as a roll-to-roll process using standard film-handling equipment. The dried mixture can be rinsed to remove any solvents or etchants that may remain. For example, de-ionized (DI) water can be used to rinse the dried mixture. The dried mixture may be cut or mechanically sectioned into smaller pieces. In some embodiments, the mixture can be coated on the current collector by a slot die coating process (e.g., metering a constant or substantially constant weight and/or volume through a set or substantially set gap). Figure 5 shows examples of a slurry of carbon precursor and silicon particles coated and dried on stainless steel foils.

With reference to block 130 of Figure 1, the mixture further goes through pyrolysis. In various embodiments, pyrolysis can convert the precursor to carbon and can adhere the pyrolysed material to the current collector. For example, after the mixture is dried, the material on the current collector can be punched and pyrolysed in a furnace. Different ramp rates and final dwell temperatures of the pyrolysis can be used in order to obtain the desired electrodes. Figure 6 shows examples of pyrolysed composite material on stainless steel. These samples were coated on one side, dried, and punched into circular shapes before pyrolysis.

In certain embodiments, the mixture is pyrolysed in a reducing atmosphere. For example, an inert atmosphere, a vacuum and/or flowing argon, nitrogen, or helium gas can be used. In some embodiments, the mixture is heated in a range from about 350°C to about 1275°C, from about 400°C to about 1275°C, from about 450°C to about 1275°C, from about 500°C to about 1275°C, from about 550°C to about 1275°C, from about 600°C to about 1275°C, from about 650°C to about 1275°C, from about 700°C to about 1275°C, from about 750°C to about 1275°C, from about 800°C to about 1275°C, from about 850°C to about 1275°C, from about 900°C to about 1275°C, from about 950°C to about 1275°C, from about 1000°C to about 1275°C, from about 350°C to about 1350°C, from about 400°C to about 1350°C, from about 450°C to about 1350°C, from about 500°C to about 1350°C, from about 550°C to about 1350°C, from about 600°C to about 1350°C, from about 650°C to about 1350°C, from about 700°C to about 1350°C, from about 750°C to about 1350°C, from about 800°C to about 1350°C, from about 850°C to about 1350°C, from about 900 °C to about 1350 °C, from about 950°C to about 1350°C, from about 1000°C to about 1350°C, etc. For example, polyimide formed from polyamic acid can be carbonized at about 1175 °C for about one hour. In certain embodiments, the heat up rate and/or cool down rate of the mixture is about 10 °C/min. A holder may be used to keep the mixture in a particular geometry. The holder can be graphite, metal, etc. In certain embodiments, the mixture is held flat. After the mixture is pyrolysed, tabs can be attached to the pyrolysed material to form electrical contacts. For example, nickel, copper or alloys thereof can be used for the tabs.

Silicide formation may be reduced by adjusting the silicon content, current collector thickness, and/or having a barrier layer between the composite material and the current collector. As described herein, providing a current collector can include providing a current collector coated with a polymer or carbon layer. Although providing such a layer may reduce the reactions between the composite material and the current collector, the layer may also result in weak adhesion at the interface in some instances. Various implementations described herein can reduce (and/or prevent) reactions yet improve adhesion between the composite material and current collector.

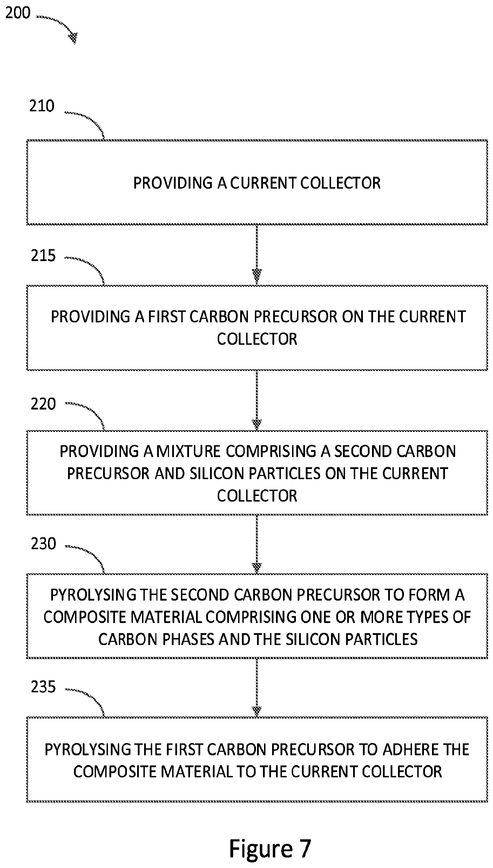

Figure 7 illustrates an example method of forming an electrode in accordance with certain implementations described herein. The method 200 of forming an electrode can include providing a current collector as shown in block 210. The method 200 can also include providing a first carbon precursor on the current collector as shown in block 215. As shown in block 220, the method 200 can include providing a mixture on the first carbon precursor. The mixture can comprise a second carbon precursor and silicon particles. The method 200 can further include pyrolysing the second carbon precursor to convert the second carbon precursor into one or more types of carbon phases to form a composite material comprising the one or more types of carbon phases and the silicon particles as shown in block 230. The composite material can comprise the one or more types of carbon phases as a substantially continuous phase with the silicon particles distributed throughout the composite material. The method 200 also can include pyrolysing the first carbon precursor to adhere the composite material to the current collector as shown in block 235.

With reference to block 210, a current collector is provided. The current collector can include any of those described herein. To improve adhesion between the composite material and the current collector, the current collector can include a transition element and/or an alloy comprising a transition element. Example current collectors can include chromium (Cr), molybdenum (Mo), iron (Fe), vanadium (V), tungsten (W), tantalum (Ta), and niobium (Nb) metals or alloys containing these materials. For example, the current collector can comprise stainless steel which includes Fe and Cr. As another example, the current collector can comprise nichrome which includes Ni, Cr, and sometimes Fe. The current collector can comprise mainly such materials or can comprise a clad material containing such materials. The current collector comprises a layer of such materials provided on at least one side of another material. For example, such materials can be deposited on a common current collector (e.g., Ni or Cu). Without being bound by theory, carbon (during pyrolysis) diffuses (e.g., via thermal diffusion) to the transition element in the current collector, thereby improving the adhesion between the pyrolysed composite material and the current collector. Other materials are possible, e.g., materials that allow thermal diffusion of carbon above the carbonization temperature (e.g., greater than 350°C depending on the precursor).

With respect to block 215, a first carbon precursor is provided on the current collector. As described herein, a first layer of carbon precursor material can be coated on the current collector. The first carbon precursor can be any of those described herein, including but not limited to polyamic acids, phenol formaldehyde resins, polyimides (e.g., PMDA-ODA or BPDA-ODA), polyacrylonitrile, polypyyrole, etc. Some such precursors can be carbonized to obtain about 10% to about 70% char yield. In some instances, having less than 10% char yield may result in porosity which may affect adhesion. In some instances, the method 200 can include drying the first carbon precursor prior to providing the mixture on the first carbon precursor in block 220. The first carbon precursor can be dried in a convection oven at a temperature high enough to dry at least some or most of the solvent and low enough to reduce or avoid foil oxidation. The first carbon precursor on the current collector can have a thickness in the range of about 1 µm to about 1 mm. Some such thicknesses can reduce (and/or prevent) silicon interaction with the current collector during coating and pyrolysis. The choice of the first carbon precursor and layer thickness may be based at least in part on the silicon particle size and/or the roughness of the composite material coated on the first carbon precursor layer.

With respect to block 220, a mixture comprising a second carbon precursor and silicon particles can be provided on the first carbon precursor. The second carbon precursor can be any of those described herein. For example, the mixture can comprise a slurry comprising the second carbon precursor and silicon particles. The second carbon precursor can be chemically the same or different than the first carbon precursor. The mixture can be dried similarly as the first carbon precursor. In some instances, the mixture is dried prior to pyrolysing the second carbon precursor in block 230.

With respect to blocks 230 and 235, the second carbon precursor can be pyrolysed to convert the second carbon precursor into one or more types of carbon phases to form the composite material comprising carbon and silicon, and the first carbon precursor can be pyrolysed to adhere the composite material to the current collector. In some implementations, pyrolysing the first carbon precursor may cause the pyrolysed carbon to diffuse into the current collector. The first and second carbon precursors can advantageously be pyrolysed during the same heat treatment. For example, the double coated layers of precursor can undergo the same pyrolysis process. In some instances, the first carbon precursor may be pyrolysed prior to the second carbon precursor. In some instances, the second carbon precursor may be pyrolysed prior to the first carbon precursor. The precursors can be pyrolysed as described herein. For example, the first and/or second precursor can be pyrolysed in a furnace under an inert or reducing atmosphere. The precursors can be pyrolysed at a temperature described herein, e.g., from about 350°C to about 1275°C, from about 350°C to about 1350°C, from about 700°C to about 1275°C, from about 700°C to about 1350°C, from about 900°C to about 1275°C, from about 900°C to about 1350°C, etc.

As described herein, without being bound by theory, current collectors that contain a transition element or alloy comprising a transition element (e.g., Cr, Mo, Fe, V, W, Ta, Nb, etc.) can allow partial diffusion of carbon (e.g., formed by pyrolysis of the first layer) through the current collector. Such diffusion can help provide sufficient (and/or good and/or excellent) adhesion between the silicon-carbon composite material and the current collector. The barrier carbon layer can also reduce (and/or prevent) silicon contact with the current collector, thereby reducing (and/or preventing) silicide formation with the current collector.

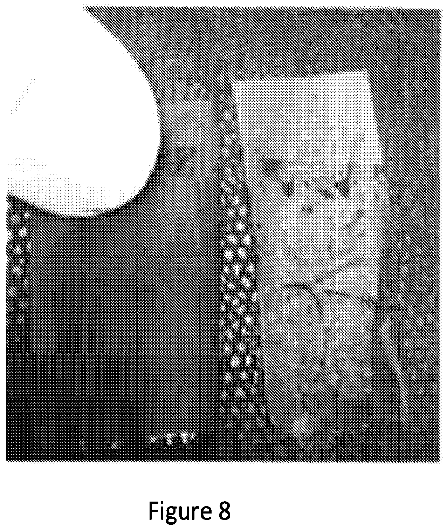

Figure 8 shows a silicon-carbon composite material that was pyrolysed at 700°C on nichrome foil next to tape after a tape test. The tape test showed better adhesion compared to the silicon-carbon composite material that was pyrolysed on copper foil shown in Figure 3A. Without being bound by theory, the adhesion can be attributed to diffusion of carbon (during pyrolysis) from the first layer to the Cr in the nichrome. For stainless steel, the adhesion can be attributed to diffusion of carbon (during pyrolysis) from the first layer to the Fe and Cr in the stainless steel. Such diffusion can also apply to foils that have Mo, W, Ta, Nb, V, etc.

In certain embodiments, one or more of the methods described herein is a continuous process. For example, casting, drying, possibly curing, and pyrolysis can be performed in a continuous process; e.g., the mixture can be coated, dried, and pyrolysed on the current collector. The mixture can be dried while rotating on the cylinder creating a film. The dried mixture on the current collector can be transferred as a roll and fed into another machine for further processing. Extrusion and other film manufacturing techniques known in industry could also be utilized prior to the pyrolysis step.

Pyrolysis of the precursor results in a carbon material (e.g., at least one carbon phase). In certain embodiments, the carbon material is a hard carbon. In some embodiments, the precursor is any material that can be pyrolysed to form a hard carbon. When the mixture includes one or more additional materials or phases in addition to the carbonized precursor, a composite material can be created. In particular, as described herein, the mixture can include silicon particles creating a silicon-carbon (e.g., at least one first phase comprising silicon and at least one second phase comprising carbon) or silicon-carbon-carbon (e.g., at least one first phase comprising silicon, at least one second phase comprising carbon, and at least one third phase comprising carbon) composite material.

Silicon particles can increase the specific lithium insertion capacity of the composite material. When silicon absorbs lithium ions, it experiences a large volume increase on the order of 300+ volume percent which can cause electrode structural integrity issues. In addition to volumetric expansion related problems, silicon is not inherently electrically conductive, but becomes conductive when it is alloyed with lithium (e.g., lithiation). When silicon de-lithiates, the surface of the silicon losses electrical conductivity. Furthermore, when silicon de-lithiates, the volume decreases which results in the possibility of the silicon particle losing contact with the matrix. The dramatic change in volume also results in mechanical failure of the silicon particle structure, in turn, causing it to pulverize. Pulverization and loss of electrical contact have made it a challenge to use silicon as an active material in lithium-ion batteries. A reduction in the initial size of the silicon particles can prevent further pulverization of the silicon powder as well as minimizing the loss of surface electrical conductivity. Furthermore, adding material to the composite that can elastically deform with the change in volume of the silicon particles can reduce the chance that electrical contact to the surface of the silicon is lost. For example, the composite material can include carbons such as graphite which contributes to the ability of the composite to absorb expansion and which is also capable of intercalating lithium ions adding to the storage capacity of the electrode (e.g., chemically active). Therefore, the composite material may include one or more types of carbon phases.

As described herein, in order to increase volumetric and gravimetric energy density of lithium-ion batteries, silicon may be used as the active material for the cathode or anode. Several types of silicon materials, e.g., silicon nanopowders, silicon nanofibers, porous silicon, and ball-milled silicon, are viable candidates as active materials for the negative or positive electrode.

In some embodiments, all, substantially all, or at least some of the silicon particles may have a particle size (e.g., the diameter or the largest dimension of the particle) less than about 50 µm, less than about 40 µm, less than about 30 µm, less than about 20 µm, less than about 10 µm, less than about 1 µm, between about 10 nm and about 50 µm, between about 10 nm and about 40 µm, between about 10 nm and about 30 µm, between about 10 nm and about 20 µm, between about 0.1 µm and about 20 µm, between about 0.5 µm and about 20 µm, between about 1 µm and about 20 µm, between about 1 µm and about 15 µm, between about 1 µm and about 10 µm, between about 10 nm and about 10 µm, between about 10 nm and about 1 µm, less than about 500 nm, less than about 100 nm, and about 100 nm. For example, in some embodiments, the average particle size (or the average diameter or the average largest dimension) or the median particle size (or the median diameter or the median largest dimension) of the silicon particles can be less than about 50 µm, less than about 40 µm, less than about 30 µm, less than about 20 µm, less than about 10 µm, less than about 1 µm, between about 10 nm and about 50 µm, between about 10 nm and about 40 µm, between about 10 nm and about 30 µm, between about 10 nm and about 20 µm, between about 0.1 µm and about 20 µm, between about 0.5 µm and about 20 µm, between about 1 µm and about 20 µm, between about 1 µm and about 15 µm, between about 1 µm and about 10 µm, between about 10 nm and about 10 µm, between about 10 nm and about 1 µm, less than about 500 nm, less than about 100 nm, and about 100 nm. In some embodiments, the silicon particles may have a distribution of particle sizes. For example, at least about 95%, at least about 90%, at least about 85%, at least about 80%, at least about 70%, or at least about 60% of the particles may have the particle size described herein.

The amount of silicon provided in the mixture or in the composite material can be greater than zero percent by weight of the mixture and/or composite material. In certain embodiments, the amount of silicon is within a range from about 0 % to about 99 % by weight of the composite material, including greater than about 0 % to about 99 % by weight, greater than about 0 % to about 95 % by weight, greater than about 0 % to about 90 % by weight, greater than about 0 % to about 35 % by weight, greater than about 0 % to about 25 % by weight, from about 10 % to about 35 % by weight, at least about 30 % by weight, from about 30 % to about 99 % by weight, from about 30 % to about 95 % by weight, from about 30 % to about 90 % by weight, from about 30 % to about 80 % by weight, at least about 50 % by weight, from about 50 % to about 99 % by weight, from about 50 % to about 95 % by weight, from about 50 % to about 90 % by weight, from about 50 % to about 80 % by weight, from about 50 % to about 70 % by weight, at least about 60 % by weight, from about 60 % to about 99 % by weight, from about 60 % to about 95 % by weight, from about 60 % to about 90 % by weight, from about 60 % to about 80 % by weight, at least about 70 % by weight, from about 70 % to about 99 % by weight, from about 70 % to about 95 % by weight, or from about 70 % to about 90 % by weight. In various embodiments described herein, the amount of silicon can be 90 % or greater by weight, e.g., about 90 % or greater to about 95 % by weight, about 90 % or greater to about 97 % by weight, about 90 % or greater to about 99 % by weight, about 92 % or greater to about 99 % by weight, about 95 % or greater to about 99 % by weight, about 97 % or greater to about 99 % by weight, etc.

In accordance with certain embodiments described herein, certain micron-sized silicon particles with nanometer surface features can achieve high energy density, and can be used in composite materials and/or electrodes for use in electro-chemical cells to improve performance during cell cycling. Small particle sizes of silicon (for example, sizes in the nanometer range) generally can increase cycle life performance of an electrode. They also can display very high irreversible capacity. However, small particle sizes also can result in very low volumetric energy density (for example, for the overall cell stack) due to the difficulty of packing the active material. Larger particle sizes, (for example, sizes in the micrometer or micron range) generally can result in higher density anode material. However, the expansion of the silicon active material can result in poor cycle life due to particle cracking.

In some embodiments, micron-sized silicon particles can provide good volumetric and gravimetric energy density combined with good cycle life. In certain embodiments, to obtain the benefits of both micron-sized silicon particles (e.g., high energy density) and nanometer-sized silicon particles (e.g., good cycle behavior), silicon particles can have an average particle size in the micron range and a surface including nanometer-sized features. In some embodiments, the silicon particles have an average particle size (e.g., average diameter or average largest dimension) or a median particle size (e.g., median diameter or median largest dimension) between about 0.1 µm and about 30 µm or between about 0.1 µm and all values up to about 30 µm. For example, in some embodiments, the silicon particles can have an average particle size between about 0.1 µm and about 20 µm, between about 0.5 µm and about 25 µm, between about 0.5 µm and about 20 µm, between about 0.5 µm and about 15 µm, between about 0.5 µm and about 10 µm, between about 0.5 µm and about 5 µm, between about 0.5 µm and about 2 µm, between about 1 µm and about 20 µm, between about 1 µm and about 15 µm, between about 1 µm and about 10 µm, between about 5 µm and about 20 µm, etc. Thus, the average particle size or the median particle size can be any value between about 0.1 µm and about 30 µm, e.g., 0.1 µm, 0.5 µm, 1 µm, 5 µm, 6 µm, 7 µm, 8 µm, 9 µm, 10 µm, 15 µm, 20 µm, 25 µm, and 30 µm. The nanometer-sized features can include an average feature size (e.g., an average diameter or an average largest dimension) between about 1 nm and about 1 µm, between about 1 nm and about 750 nm, between about 1 nm and about 500 nm, between about 1 nm and about 250 nm, between about 1 nm and about 100 nm, between about 10 nm and about 500 nm, between about 10 nm and about 250 nm, between about 10 nm and about 100 nm, between about 10 nm and about 75 nm, or between about 10 nm and about 50 nm. The features can include silicon material.

Furthermore, the silicon particles may have a distribution of particle sizes. For example, at least about 95%, at least about 90%, at least about 85%, at least about 80%, at least about 70%, or at least about 60% of the particles may have the particle size described herein.

In certain embodiments, the silicon particles are at least partially crystalline, substantially crystalline, and/or fully crystalline. Furthermore, the silicon particles may or may not be substantially pure silicon. For example, the silicon particles may be substantially silicon or may be a silicon alloy. In one embodiment, the silicon alloy includes silicon as the primary constituent along with one or more other elements. For example, these elements may include aluminum (Al), iron (Fe), copper (Cu), oxygen (O), or carbon (C).

Certain embodiments described herein can have an average surface area per unit mass (e.g., using Brunauer Emmet Teller (BET) particle surface area measurements) between about 1 m²/g and about 30 m²/g, between about 1 m²/g and about 25 m²/g, between about 1 m²/g and about 20 m²/g, between about 1 m²/g and about 10 m²/g, between about 2 m²/g and about 30 m²/g, between about 2 m²/g and about 25 m²/g, between about 2 m²/g and about 20 m²/g, between about 2 m²/g and about 10 m²/g, between about 3 m²/g and about 30 m²/g, between about 3 m²/g and about 25 m²/g, between about 3 m²/g and about 20 m²/g, between about 3 m²/g and about 10 m²/g (e.g., between about 3 m²/g and about 6 m²/g), between about 5 m²/g and about 30 m²/g, between about 5 m²/g and about 25 m²/g, between about 5 m²/g and about 20 m²/g, between about 5 m²/g and about 15 m²/g, or between about 5 m²/g and about 10 m²/g.

Compared with the silicon particles used in conventional electrodes, the silicon particles described herein generally have a larger average particle size. In some such embodiments, the average surface area of the silicon particles described herein is generally smaller. Without being bound to any particular theory, the lower surface area of the silicon particles described herein may contribute to the enhanced performance of electrochemical cells.

Advantageously, the silicon particles described herein can improve performance of electro-chemically active materials such as improving capacity and/or cycling performance. Furthermore, electro-chemically active materials having such silicon particles may not significantly degrade as a result of lithiation of the silicon particles.

In some implementations, the extent of carbon yield and/or quality of carbon can be based at least in part on the pyrolysis condition (e.g., final dwell temperature and duration, ramp rate, atmosphere, etc.), and/or the precursor material. In some instances, the amount of carbon obtained from the precursor can be greater than 0 % to about 80 % by weight, about 5 % to about 80% by weight, about 5 % to about 70 % by weight, about 5 % to about 60 % by weight, about 5 % to about 50 % by weight, about 5 % to about 40 % by weight, about 5 % to about 30 % by weight, about 10 % to about 50 % by weight, about 10 % to about 40 % by weight, about 10 % to about 30 % by weight, about 10 % to about 25 % by weight, etc. For example, the amount of carbon obtained from the precursor can be about 10 % by weight, about 15 % by weight, about 20 % by weight, about 25 % by weight, etc. from the precursor. When the amount of silicon is 90 % or greater by weight, the amount of carbon can be 10 % or less by weight, e.g., about 0 % or greater to about 3 % by weight, about 0 % or greater to about 5 % by weight, about 0 % or greater to about 10 % by weight, about 1 % or greater to about 3 % by weight, about 1 % or greater to about 5 % by weight, about 1 % or greater to about 8 % by weight, about 1 % or greater to about 10 % by weight, about 5 % or greater to about 10 % by weight, etc.

The carbon from the precursor can be hard carbon. Hard carbon can be a carbon that does not convert into graphite even with heating in excess of 2800 degrees Celsius. Precursors that melt or flow during pyrolysis convert into soft carbons and/or graphite with sufficient temperature and/or pressure. Hard carbon may be selected since soft carbon precursors may flow and soft carbons and graphite are mechanically weaker than hard carbons. Other possible hard carbon precursors can include phenolic resins, epoxy resins, and other polymers that have a very high melting point or are crosslinked. The amount of hard carbon in the composite material can be any of the ranges described herein with respect to the amount of carbon obtained from the precursor. For example, in some embodiments, the amount of hard carbon in the composite material can have a value within a range of about 10 % to about 25 % by weight, about 10 % to about 30 % by weight, about 10 % to about 40 % by weight, about 10 % to about 50 % by weight, about 10 % by weight, about 20 % by weight, about 30 % by weight, about 40 % by weight, about 50 % by weight, or more than about 50 % by weight. When the amount of silicon is 90 % or greater by weight, the amount of hard carbon can be 10 % or less by weight, e.g., about 0 % or greater to about 3 % by weight, about 0 % or greater to about 5 % by weight, about 0 % or greater to about 10 % by weight, about 1 % or greater to about 3 % by weight, about 1 % or greater to about 5 % by weight, about 1 % or greater to about 8 % by weight, about 1 % or greater to about 10 % by weight, about 5 % or greater to about 10 % by weight, etc.

In certain embodiments, the hard carbon phase is substantially amorphous. In other embodiments, the hard carbon phase is substantially crystalline. In further embodiments, the hard carbon phase includes amorphous and crystalline carbon. The hard carbon phase can be a matrix phase in the composite material. The hard carbon can also be embedded in the pores of the additives including silicon. The hard carbon may react with some of the additives to create some materials at interfaces. For example, there may be a silicon carbide layer between silicon particles and the hard carbon.

In some embodiments, graphite is one of the types of carbon phases from the precursor. In certain embodiments, graphite particles are added to the mixture. Advantageously, graphite can be an electrochemically active material in the battery as well as an elastic deformable material that can respond to volume change of the silicon particles. Graphite is the preferred active anode material for certain classes of lithium-ion batteries currently on the market because it has a low irreversible capacity. Additionally, graphite is softer than hard carbon and can better absorb the volume expansion of silicon additives. In certain embodiments, all, substantially all, or at least some of the graphite particles may have a particle size (e.g., a diameter or a largest dimension) between about 0.5 microns and about 20 microns. In some embodiments, an average particle size (e.g., an average diameter or an average largest dimension) or median particle size (e.g., a median diameter or a median largest dimension) of the graphite particles is between about 0.5 microns and about 20 microns. In some embodiments, the graphite particles may have a distribution of particle sizes. For example, at least about 95%, at least about 90%, at least about 85%, at least about 80%, at least about 70%, or at least about 60% of the particles may have the particle size described herein. In certain embodiments, the composite material can include graphite particles in an amount greater than 0 % and less than about 80 % by weight, including from 40 % to about 75 % by weight, from about 5 % to about 30 % by weight, from 5 % to about 25 % by weight, from 5 % to about 20 % by weight, or from 5 % to about 15 % by weight. When the amount of silicon is 90 % or greater by weight, the amount of graphite can be 10 % or less by weight, e.g., about 0 % or greater to about 3 % by weight, about 0 % or greater to about 5 % by weight, about 0 % or greater to about 10 % by weight, about 1 % or greater to about 3 % by weight, about 1 % or greater to about 5 % by weight, about 1 % or greater to about 8 % by weight, about 1 % or greater to about 10 % by weight, about 5 % or greater to about 10 % by weight, etc.

In certain embodiments, conductive particles which may also be electrochemically active are added to the mixture. Such particles can enable both a more electronically conductive composite as well as a more mechanically deformable composite capable of absorbing the large volumetric change incurred during lithiation and de-lithiation. In certain embodiments, all, substantially all, or at least some of the conductive particles can have a particle size (e.g., the diameter or the largest dimension) between about 10 nanometers and about 7 millimeters. In some embodiments, an average particle size (e.g., an average diameter or an average largest dimension) or a median particle size (e.g., a median diameter or a median largest dimension) of the conductive particles is between about 10 nm and about 7 millimeters. In some embodiments, the conductive particles may have a distribution of particle sizes. For example, at least about 95%, at least about 90%, at least about 85%, at least about 80%, at least about 70%, or at least about 60% of the particles may have the particle size described herein.

In certain embodiments, the mixture includes conductive particles in an amount greater than zero and up to about 80 % by weight. In some embodiments, the composite material includes about 45 % to about 80 % by weight. The conductive particles can be conductive carbon including carbon blacks, carbon fibers, carbon nanofibers, carbon nanotubes, etc. Many carbons that are considered as conductive additives that are not electrochemically active become active once pyrolysed in a polymer matrix. Alternatively, the conductive particles can be metals or alloys including copper, nickel, or stainless steel. When the amount of silicon is 90 % or greater by weight, the amount of conductive particles can be 10 % or less by weight, e.g., about 0 % or greater to about 3 % by weight, about 0 % or greater to about 5 % by weight, about 0 % or greater to about 10 % by weight, about 1 % or greater to about 3 % by weight, about 1 % or greater to about 5 % by weight, about 1 % or greater to about 8 % by weight, about 1 % or greater to about 10 % by weight, about 5 % or greater to about 10 % by weight, etc.

After the precursor is pyrolysed, the resulting material is a composite material that adheres to the current collector. The current collector can provide additional mechanical support as the composite material can also be a self-supporting monolithic structure, e.g., a self-supporting composite film. For example, the carbonized precursor can result in an electrochemically active structure that holds the composite material together. In some embodiments, the carbonized precursor can be a substantially continuous phase. Thus, the carbonized precursor can be a structural material as well as an electro-chemically active and electrically conductive material. In certain embodiments, the silicon particles and/or material particles added to the mixture are distributed throughout the composite material. In some embodiments, the silicon particles and/or other material particles can be homogenously distributed throughout the composite material to form a homogeneous composite.

In some embodiments, the composite material and/or electrode does not include a polymer beyond trace amounts that remain after pyrolysis of the precursor. In further embodiments, the composite material and/or electrode does not include a non-electrically conductive binder. The composite material may also include porosity. In some embodiments, the composite material (or the film) can include porosity of about 1% to about 70% or about 5% to about 50% by volume porosity. For example, the porosity can be about 5% to about 40% by volume porosity.

In certain embodiments, an electrode in an electrochemical device such as a battery or electrochemical cell can include a composite material, including composite material with the silicon particles described herein. For example, the composite material can be used for the anode and/or cathode. The electrochemical device can include electrolyte, and can be a battery. In certain embodiments, the battery is a lithium ion battery. In further embodiments, the battery is a secondary battery, or in other embodiments, the battery is a primary battery.

Furthermore, the full capacity of the composite material of the electrodes described herein may not be utilized during use of the battery to improve life of the battery (e.g., number charge and discharge cycles before the battery fails or the performance of the battery decreases below a usability level). For example, a composite material with about 70 % by weight of silicon particles, about 20 % by weight of carbon from a precursor, and about 10 % by weight of graphite may have a maximum gravimetric capacity of about 3000 mAh/g, while the composite material may only be used up to an gravimetric capacity of about 550 to about 1500 mAh/g. Although, the maximum gravimetric capacity of the composite material may not be utilized, using the composite material at a lower capacity can still achieve a higher capacity than certain lithium ion batteries. In certain embodiments, the composite material is used or only used at an gravimetric capacity below about 70 % of the composite material's maximum gravimetric capacity. For example, the composite material is not used at an gravimetric capacity above about 70 % of the composite material's maximum gravimetric capacity. In further embodiments, the composite material is used or only used at an gravimetric capacity below about 50 % of the composite material's maximum gravimetric capacity or below about 30 % of the composite material's maximum gravimetric capacity.

### EXAMPLES

The following examples are provided to demonstrate the benefits of some embodiments of electrodes, electrochemical cells, and methods of forming the same. These examples are discussed for illustrative purposes and should not be construed to limit the scope of the disclosed embodiments.

Instead of forming electrochemically active material on a substrate, removing the active material from the substrate, and attaching the active material to a current collector, various embodiments described herein can simplify the manufacturing process by pyrolysing the active material on the current collector (e.g., directly on the current collector in various embodiments). Example coin cells were built using standard cathodes, standard electrolyte, and anodes formed using various embodiments described herein. Such coin cells were compared with coin cells built using standard cathodes, standard electrolyte, and anodes formed by laminating pyrolysed material (e.g., previously pyrolysed material) onto a copper or stainless steel current collector. Table I includes the test conditions for the different samples.

**TABLE I.**

| Cycling | |
|---|---|
| Cycle 1 | Charge at 0.5C to 4.3 V for 5 hours, rest 5 minutes, discharge at 0.2C to 2.75 V, rest 5 minutes |
| Cycle 2 | Charge at 0.5C to 4.3 V until 0.05C, rest 5 minutes, discharge at 0.5C to 3.3 V, rest 5 minutes |
| Cycles 3-50 | Same as Cycle 2 |
| Cycle 51 | Same as Cycle 1 |
| Cycles 52-100 | Same as Cycle 2 |
| Cycle 101 | Same as Cycle 1 |

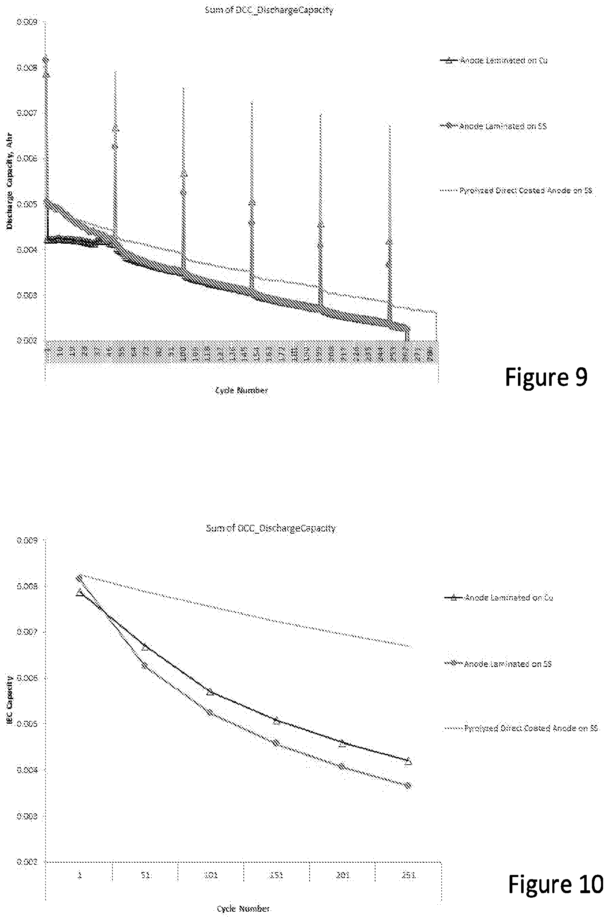

Figure 9 is a plot of discharge capacity as a function of the number of cycles for the different samples. Every fiftieth cycle was plotted to create Figure 10 which is a plot of the IEC (International Electrotechnical Commission) capacity as a function of the cycle number. As shown, the samples including the anode formed by coating and pyrolysing active material on a stainless steel current collector had the highest capacity compared to the samples where the anodes were first formed and subsequently laminated onto a copper or stainless steel current collector.

### Additional Examples

First Layer Preparation: High molecular weight (e.g., >200,000 g/mol) polyamideimide powder was dispersed in a dipolar aprotic solvent of N-Methyl-2-pyrrolidone (NMP) overnight at 75°C to obtain 10% solid content resin. This resin was then coated using a manual coating applicator on 50µm stainless steel (316H) and 50µm nichrome (20% Cr) foil respectively. The coating was allowed to dry in a convection oven for 30 minutes at 100°C and then overnight under vacuum at 100°C.

Slurry and Green Anode Preparation: Silicon nano/microparticles were dispersed in polyamic acid resin under high shear conditions (using a centrifugal planetary mixer at 2000 rpm for 10 minutes) to get uniform slurry with >20% Si by weight. The solvent N-Methyl-2-pyrrolidone (NMP) was used to dilute and adjust the slurry viscosity to ~2000cP. The slurry was then cast on the first layer coated on foils and dried to remove most of the residual solvent. These dried anodes were then punched to obtain 16mm diameter samples.

Pyrolysis: The punched green anodes were then pyrolysed under Ar at 5scfh flow rate with a slow ramp rate of 5°C/min until it reached 900°C and then dwelled at the temperature for 2 hours. Cooling was done at around the same ramp down rate. Loading of the anode without the foil was controlled to around 3.8mg/cm².

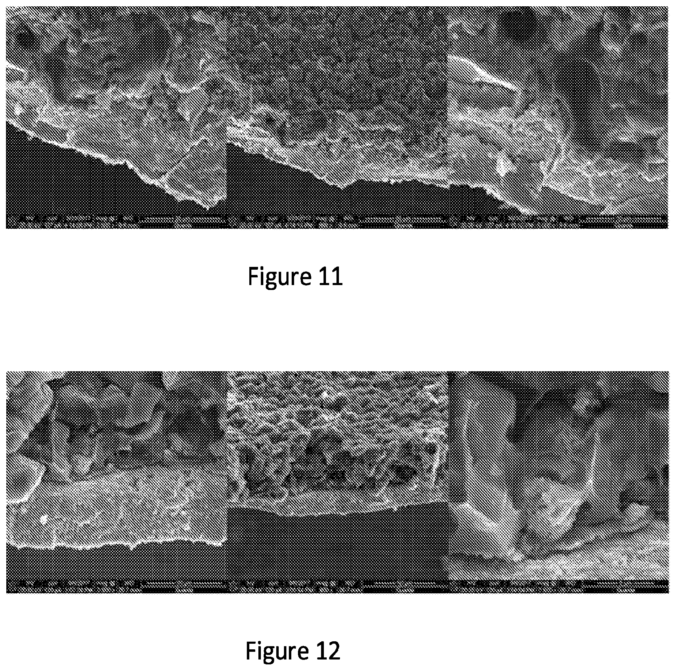

Figure 11 show SEM images of the cross section of the pyrolysed anode on nichrome foil showing good adhesion at the anode/foil interface under different magnifications. Figure 12 show SEM images of the cross section of the pyrolysed anode on stainless steel showing good adhesion at the composite material/foil interface under different magnifications.

The resulting electrodes were electrically tested in coin cells, and compared to anodes obtained by pyrolysis and lamination of a free standing film on copper or stainless steel foils. Table II includes coin cell construction details; and Table III includes the test conditions for the different samples.

**TABLE II.**

| Coin cell construction: |
|---|
| Cathode: 95% LCO, 2.5% PVDF, 2.5%Carbon, 28mg/cm² |
| Electrolyte: 1M LiPF₆ in FEC:EMC (3:7) by weight + 2% Adiponitrile |
| Anode: 3.8mg/cm², 80% Si active material, 20% pyrolysed carbon |

**TABLE III.**

| Formation | |
|---|---|
| Cycle 1-3 | Charge at 0.96C to 4.3 V until 0.05C, discharge at 0.96C to 3.3 V |
| Cycle 4 | Charge at 0.96C to 4.3 V until 0.05C, discharge at 0.96C to 3.3 V, rest 30 seconds |

| Cycling | |
|---|---|
| Cycle 1 | Charge at 0.5C to 4.3 V for 5 hours, rest 5 minutes, discharge at 0.2C to 2.75 V, rest 5 minutes |
| Cycle 2 | Charge at 0.5C to 4.3 V until 0.05C, rest 5 minutes, discharge at 0.5C to 3.3 V, rest 5 minutes |
| Cycles 3-50 | Same as Cycle 2 |
| Cycle 51 | Same as Cycle 1 |
| Cycles 52-100 | Same as Cycle 2 |
| Cycle 101 | Same as Cycle 1 |

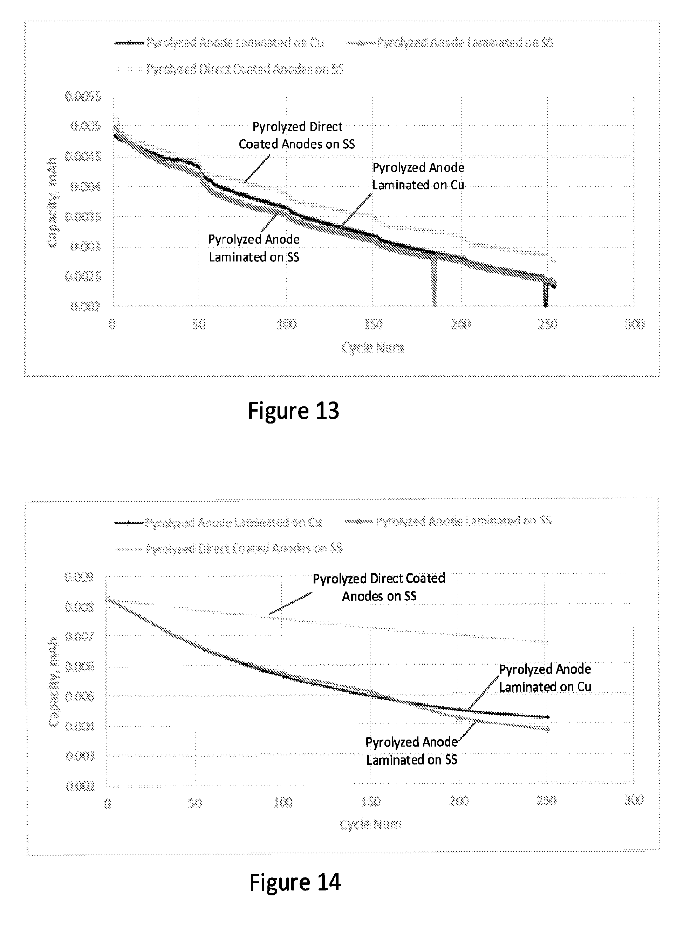

Figure 13 shows coin cell capacity (mAh) versus cycle number. The cells were charged at 0.5C to 4.3V for 5 hours. Figure 14 shows the discharge capacity. The cells were discharged down to 2.75V at 0.2C every 50 cycles. Cells with anodes prepared by pyrolysing on the current collector as described herein had improved performance compared to free standing films laminated on copper or stainless steel foils. The cells show good cycling behavior when cycled down to low cell voltages to high cell voltages, allowing higher Si delithiation.

Coating and pyrolysis of silicon-carbon composite material (including silicon dominant composite material) is feasible and manufacturable. Certain implementations described herein can allow the electrode material to be pyrolysed on a current collector, the active material to be Si-based, and the resin to be pyrolyzed at relatively high temperatures (e.g., higher than 700°C, higher than 800°C, higher than 900°C, higher than 1000°C, etc.). Various implementations can coat and pyrolyse silicon-carbon composite material (e.g., including silicon dominant composite material) at temperatures where the carbon precursor can carbonize and diffuse in a current collector to provide adhesion. The active material can maintain adhesion at the electrode material/foil interface which in some cases can be critical to improve cycle life at deep full cell discharge voltages where Si is highly delithiated.

## Claims

1. A method (200) of forming an electrode, the method (200) comprising:
providing (210) a current collector;
providing (215) a first carbon precursor on the current collector;
providing (220) a mixture on the first carbon precursor, the mixture comprising a second carbon precursor and silicon particles;
pyrolysing (230) the second carbon precursor to convert the second carbon precursor into one or more types of carbon phases to form a composite material comprising the one or more types of carbon phases as a substantially continuous phase with the silicon particles distributed throughout the composite material; and
pyrolysing (235) the first carbon precursor to adhere the composite material to the current collector;
wherein the current collector comprises a transition element and/or an alloy comprising a transition element;
wherein the current collector comprises a layer comprising the transition element and/or the alloy comprising the transition element on at least one side of the current collector, and the first carbon precursor is provided on the at least one side of the current collector;
wherein pyrolysing the first carbon precursor causes the pyrolyzed carbon to diffuse into the current collector.

2. The method (200) of Claim 1, wherein the transition element or the alloy comprises chromium, molybdenum, iron, vanadium, tungsten, tantalum, niobium, or a combination thereof.

3. The method (200) of Claim 1, wherein pyrolysing the first and second carbon precursors occur during the same heat treatment.

4. The method (200) of Claim 1, wherein pyrolysing the first and second carbon precursors occur at a temperature in a range of about 350 °C to about 1350 °C.

5. The method (200) of Claim 1, wherein the first carbon precursor has a 10% to 70% char yield.

6. The method (200) of Claim 1, wherein the first carbon precursor comprises polyamic acid, phenol formaldehyde resin, polypyrrole, polyacrylonitrile, polyamideimide, polyimide, a polyimide precursor, or a combination thereof.

7. The method (200) of Claim 6, wherein the polyimide precursor comprises pyromellitic dianhydride oxidianiline (PMDA-ODA), biphenyl tetracarboxylic acid dianhydride oxidianiline (BPDA-ODA), biphenyl tetracarboxylic acid dianhydride- p-phenylene diamine (BPDA-PDA), pyromellitic dianhydride - p-phenylene diamine (PMDA-PDA), or a combination thereof.

8. The method (200) of Claim 1, wherein providing the first carbon precursor comprises coating the first carbon precursor on the current collector.

9. The method (200) of Claim 1, further comprising drying the first carbon precursor prior to providing the mixture on the first carbon precursor.

10. The method (200) of Claim 1, wherein the first carbon precursor and the second carbon precursor are chemically the same.

11. The method (200) of Claim 1, wherein the first carbon precursor is chemically different than the second carbon precursor.

12. The method (200) of Claim 1, wherein providing the mixture comprises providing a slurry comprising the second carbon precursor and silicon particles.

13. The method (200) of Claim 1, further comprising drying the mixture prior to pyrolysing the second carbon precursor.

14. The method (200) of Claim 2, wherein the alloy comprises nickel and chromium.

15. A method of forming an electrochemical device, the method comprising:
providing a first electrode, wherein providing the first electrode comprises providing the electrode formed by the method (200) of Claim 1;
providing a second electrode; and
providing electrolyte.

## Patentansprüche

1. Verfahren (200) zur Herstellung einer Elektrode, wobei das Verfahren (200) umfasst:
Bereitstellen (210) eines Stromkollektors;
Bereitstellen (215) eines ersten Kohlenstoffpräkursors auf dem Stromkollektor;
Bereitstellen (220) eines Gemisches auf dem ersten Kohlenstoffpräkursor, wobei das Gemisch einen zweiten Kohlenstoffpräkursor und Siliziumteilchen umfasst;
Pyrolysieren (230) des zweiten Kohlenstoffpräkursors, um den zweiten Kohlenstoffpräkursor in eine oder mehrere Arten von Kohlenstoffphasen umzuwandeln, um ein Verbundmaterial zu bilden, das die eine oder mehreren Arten von Kohlenstoffphasen als im Wesentlichen kontinuierliche Phase umfasst, wobei die Siliziumteilchen im gesamten Verbundmaterial verteilt sind; und
Pyrolysieren (235) des ersten Kohlenstoffpräkursors, um das Verbundmaterial an den Stromkollektor zu heften;
wobei der Stromkollektor ein Übergangselement und/oder eine Legierung umfasst, die ein Übergangselement umfasst;
wobei der Stromkollektor auf mindestens einer Seite des Stromkollektors eine Schicht umfasst, die das Übergangselement und/oder die das Übergangselement umfassende Legierung enthält, und der erste Kohlenstoffpräkursor auf der mindestens einen Seite des Stromkollektors aufgebracht ist;
wobei das Pyrolysieren des ersten Kohlenstoffpräkursors bewirkt, dass der pyrolysierte Kohlenstoff in den Stromkollektor diffundiert.

2. Verfahren (200) nach Anspruch 1, wobei das Übergangselement oder die Legierung Chrom, Molybdän, Eisen, Vanadium, Wolfram, Tantal, Niob oder eine Kombination davon umfasst.

3. Verfahren (200) nach Anspruch 1, wobei das Pyrolysieren des ersten und des zweiten Kohlenstoffpräkursors während derselben Wärmebehandlung stattfindet.

4. Verfahren (200) nach Anspruch 1, wobei das Pyrolysieren des ersten und des zweiten Kohlenstoffpräkursors bei einer Temperatur im Bereich von etwa 350°C bis etwa 1350°C erfolgt.

5. Verfahren (200) nach Anspruch 1, wobei der erste Kohlenstoffpräkursor eine Kohleausbeute von 10 % bis 70 % aufweist.

6. Verfahren (200) nach Anspruch 1, wobei der erste Kohlenstoffpräkursor Polyamidsäure, Phenol-Formaldehyd-Harz, Polypyrrol, Polyacrylnitril, Polyamidimid, Polyimid, einen Polyimid-Präkursor oder eine Kombination davon umfasst.

7. Verfahren (200) nach Anspruch 6, wobei der Polyimid-Präkursor Pyromellitsäuredianhydridoxidianilin (PMDA-ODA), Biphenyltetracarbonsäuredianhydridoxidianilin (BPDA-ODA), Biphenyltetracarbonsäuredianhydrid-p-phenylendiamin (BPDA-PDA), Pyromellitsäuredianhydrid-p-phenylendiamin (PMDA-PDA) oder eine Kombination davon umfasst.

8. Verfahren (200) nach Anspruch 1, wobei das Aufbringen des ersten Kohlenstoffpräkursors das Beschichten des Stromkollektors mit dem ersten Kohlenstoffpräkursor umfasst.

9. Verfahren (200) nach Anspruch 1, das ferner das Trocknen des ersten Kohlenstoffpräkursors vor dem Aufbringen des Gemisches auf den ersten Kohlenstoffpräkursor umfasst.

10. Verfahren (200) nach Anspruch 1, wobei der erste Kohlenstoffpräkursor und der zweite Kohlenstoffpräkursor chemisch identisch sind.

11. Verfahren (200) nach Anspruch 1, wobei sich der erste Kohlenstoffpräkursor chemisch vom zweiten Kohlenstoffpräkursor unterscheidet.

12. Verfahren (200) nach Anspruch 1, wobei das Aufbringen des Gemisches das Aufbringen einer Aufschlämmung umfasst, die den zweiten Kohlenstoffpräkursor und Siliziumteilchen umfasst.

13. Verfahren (200) nach Anspruch 1, das ferner das Trocknen des Gemisches vor dem Pyrolysieren des zweiten Kohlenstoffpräkursors umfasst.

14. Verfahren (200) nach Anspruch 2, wobei die Legierung Nickel und Chrom umfasst.

15. Verfahren zur Herstellung einer elektrochemischen Vorrichtung, wobei das Verfahren umfasst:
Bereitstellen einer ersten Elektrode, wobei das Bereitstellen der ersten Elektrode das Bereitstellen der durch das Verfahren (200) nach Anspruch 1 gebildeten Elektrode umfasst;
Bereitstellen einer zweiten Elektrode; und
Bereitstellen von Elektrolyt.

## Revendications

1. Procédé (200) de formation d'une électrode, le procédé (200) comprenant :
la fourniture (210) d'un collecteur de courant ;
la fourniture (215) d'un premier précurseur de carbone sur le collecteur de courant ;
la fourniture (220) d'un mélange sur le premier précurseur de carbone, le mélange comprenant un second précurseur de carbone et des particules de silicium ;
la pyrolyse (230) du second précurseur de carbone pour convertir le second précurseur de carbone en un ou plusieurs types de phases de carbone afin de former un matériau composite comprenant le ou les types de phases de carbone sous forme de phase sensiblement continue avec les particules de silicium réparties dans tout le matériau composite ; et
la pyrolyse (235) du premier précurseur de carbone pour faire adhérer le matériau composite au collecteur de courant ;
dans lequel le collecteur de courant comprend un élément de transition et/ou un alliage comprenant un élément de transition ;
dans lequel le collecteur de courant comprend une couche comprenant l'élément de transition et/ou l'alliage comprenant l'élément de transition sur au moins une face du collecteur de courant, et le premier précurseur de carbone est disposé sur ladite au moins une face du collecteur de courant ;
dans lequel la pyrolyse du premier précurseur de carbone provoque la diffusion du carbone pyrolysé dans le collecteur de courant.

2. Procédé (200) selon la revendication 1, dans lequel l'élément de transition ou l'alliage comprend du chrome, du molybdène, du fer, du vanadium, du tungstène, du tantale, du niobium ou une combinaison de ceux-ci.

3. Procédé (200) selon la revendication 1, dans lequel la pyrolyse des premier et second précurseurs de carbone a lieu au cours du même traitement thermique.

4. Procédé (200) selon la revendication 1, dans lequel la pyrolyse des premier et second précurseurs de carbone a lieu à une température comprise dans une plage allant d'environ 350 °C à environ 1 350 °C.

5. Procédé (200) selon la revendication 1, dans lequel le premier précurseur de carbone présente un rendement de carbonisation de 10 % à 70 %.

6. Procédé (200) selon la revendication 1, dans lequel le premier précurseur de carbone comprend de l'acide polyamique, une résine phénol-formaldéhyde, du polypyrrole, du polyacrylonitrile, du polyamideimide, du polyimide, un précurseur de polyimide ou une combinaison de ceux-ci.

7. Procédé (200) selon la revendication 6, dans lequel le précurseur de polyimide comprend du dianhydride pyromellitique oxydianiline (PMDA-ODA), du dianhydride d'acide biphényl tétracarboxylique oxydianiline (BPDA-ODA), du dianhydride d'acide biphényl tétracarboxylique - p-phénylène diamine (BPDA-PDA), du dianhydride pyromellitique - p-phénylène diamine (PMDA-PDA), ou une combinaison de ceux-ci.

8. Procédé (200) selon la revendication 1, dans lequel la fourniture du premier précurseur de carbone comprend le revêtement du premier précurseur de carbone sur le collecteur de courant.

9. Procédé (200) selon la revendication 1, comprenant en outre le séchage du premier précurseur de carbone avant de fournir le mélange sur le premier précurseur de carbone.

10. Procédé (200) selon la revendication 1, dans lequel le premier précurseur de carbone et le second précurseur de carbone sont chimiquement identiques.

11. Procédé (200) selon la revendication 1, dans lequel le premier précurseur de carbone est chimiquement différent du second précurseur de carbone.

12. Procédé (200) selon la revendication 1, dans lequel la fourniture du mélange comprend la fourniture d'une suspension épaisse comprenant le second précurseur de carbone et des particules de silicium.

13. Procédé (200) selon la revendication 1, comprenant en outre le séchage du mélange avant la pyrolyse du second précurseur de carbone.

14. Procédé (200) selon la revendication 2, dans lequel l'alliage comprend du nickel et du chrome.

15. Procédé de formation d'un dispositif électrochimique, le procédé comprenant :
la fourniture d'une première électrode, dans lequel la fourniture de la première électrode comprend la fourniture de l'électrode formée par le procédé (200) selon la revendication 1 ;
la fourniture d'une seconde électrode ; et
la fourniture d'un électrolyte.
